# EUROPÄISCHE PATENTSCHRIFT

(11) **EP 2 513 725 B1**
(45) Veröffentlichungstag und Bekanntmachung des Hinweises auf die Patenterteilung: **14.06.2017**
(21) Anmeldenummer: 10773284.4
(22) Anmeldetag: 22.10.2010
(51) Int. Cl.: G05B 9/02, H02K 29/06, H02P 6/16

(54) **VERFAHREN UND VORRICHTUNG ZUM BETREIBEN EINES STEUERGERÄTS ZUR ERFASSUNG EINER POSITION EINES LÄUFERS EINES ELEKTROMOTORS**
METHOD AND DEVICE FOR OPERATING A CONTROLLER FOR DETECTING A POSITION OF A RUNNER OF AN ELECTRICAL MOTOR
PROCÉDÉ ET DISPOSITIF PERMETTANT DE FAIRE FONCTIONNER UN APPAREIL DE COMMANDE DESTINÉ À DÉTECTER LA POSITION DE L'INDUIT D'UN MOTEUR ÉLECTRIQUE

(30) Priorität: 16.12.2009 DE 102009054722
(43) Veröffentlichungstag der Anmeldung: 24.10.2012
(73) Patentinhaber: Robert Bosch GmbH, 70442 Stuttgart (DE)
(72) Erfinder: OIRSOUW, Harrie, 70173 Stuttgart (DE)
(86) Internationale Anmeldenummer: PCT/EP2010/065932
(87) Internationale Veröffentlichungsnummer: WO 2011/082852

(56) Entgegenhaltungen:
- EP-A2- 1 342 648
- DE-A1-102006 014 700
- JP-A- 11 125 537
- US-B1- 6 380 536

## Beschreibung

### Technisches Gebiet

Die Erfindung betrifft Elektromotoren, bei denen die Position eines Läufers mit Hilfe eines Lagesensors oder durch Auswertung der Läuferlage mit Hilfe elektrischer Messverfahren durchgeführt wird.

Weiterhin betrifft die Erfindung Steuergeräte und Motorsysteme, die in einen Schlafmodus versetzt werden können, um elektrische Energie einzusparen.

### Stand der Technik

Häufig werden Elektromotoren mit Positionssensoren versehen, um die absolute Winkellage eines Läufers des Elektromotors bzw. die Position eines von dem Elektromotor angetriebenen Stellelements zu detektieren. Derartige Positionssensoren können beispielsweise Hall-Sensoren oder GMR-Sensoren sein (GMR: Giant Magnetic Resistance), die an einer Welle des Elektromotors angeordnet sind und abhängig von einer Bewegung des Läufers des Elektromotors elektrische Signale generieren.

Steuergeräte, insbesondere batteriebetriebene Steuergeräte, wie sie beispielsweise in Kraftfahrzeugen vorkommen, weisen üblicherweise neben einem Normalbetriebsmodus, in dem die in dem Steuergerät implementierten Funktionen in definierter Weise ausgeführt werden, noch einen Schlafbetriebsmodus auf, in dem nur ein Teil der Funktionen und/oder zumindest ein Teil der Funktionen nur mit verminderter Leistung betrieben werden, z. B. durch Reduzierung einer Taktfrequenz.

Aus dem Schlafbetriebsmodus kann das Steuergerät durch eine externe Triggerung aufgeweckt werden. So ist beispielsweise vorgesehen, dass bei einer Betätigung des von dem Elektromotor angetriebenen Stellelements das Steuergerät aufgeweckt wird, indem auch im Schlafbetriebsmodus der Positionssensor des Elektromotors permanent abgefragt wird, um eine Veränderung der Position des Läufers des Elektromotors zu detektieren und das Steuergerät in Folge in den Normalbetriebsmodus zu versetzen.

Um jedoch ein Signal von dem Positionssensor zu erhalten, muss dieser auch während des Schlafbetriebsmodus mit elektrischer Energie versorgt werden bzw. das Steuergerät muss eine entsprechende elektrische Größe des Positionssensors permanent auslesen. Dies benötigt im Schlafbetriebsmodus elektrische Energie, und es ist wünschenswert, die dafür benötigte elektrische Energie zu reduzieren.

Wird der Positionssensor des Elektromotors nicht überwacht, so geht durch Bewegen des Läufers des Elektromotors während des Schlafbetriebsmodus die Positionsinformation verloren, so dass die Stellung des durch den Elektromotor angetriebenen Stellelements auch nach dem Aufwecken aus dem Schlafbetriebsmodus nicht mehr bestimmt werden kann, ohne zuvor eine Kalibrierung durchzuführen. Eine solche Kalibrierung besteht in der Regel darin, das Stellelement an einer Endposition anzufahren, was jedoch für den Benutzer als störend empfunden werden kann. Das Dokument EP1342648 offenbart ein Verfahren zum Betreiben eines Steuergeräts gemäß dem Stand der Technik. Es ist Aufgabe der vorliegenden Erfindung, ein Verfahren und eine Vorrichtung zur Verfügung zu stellen, wobei die benötigte elektrische Energie in einem Schlafbetriebsmodus möglichst reduziert ist und wobei ein Aufwecken aus einem Schlafbetriebsmodus eines Steuergeräts bei Bewegung eines Läufers eines Elektromotors durchgeführt werden kann, ohne dass eine Positionsinformation verloren geht.

### Offenbarung der Erfindung

Diese Aufgabe wird durch das Verfahren zum Betreiben eines Steuergeräts mit einem Schlafbetriebsmodus gemäß Anspruch 1 sowie durch ein Steuergerät und ein Motorsystem gemäß den nebengeordneten Ansprüchen gelöst.

Weitere vorteilhafte Ausgestaltungen sind in den abhängigen Ansprüchen angegeben.

Gemäß einem ersten Aspekt ist ein Verfahren zum Betreiben eines Steuergeräts zum Erfassen einer Position eines Läufers einer elektrischen Maschine, insbesondere einer Rotorlage eines Rotors, vorgesehen. Das Verfahren umfasst die folgenden Schritte:
- Überwachen einer Versorgungsleitung der elektrischen Maschine, um ein durch Induktion einer Generatorspannung erzeugtes Signal als Triggersignal zu erkennen;
- bei einem Erkennen des Triggersignals, Wechseln von einem ersten Betriebsmodus, in dem zumindest die Funktion einer Erfassung der Position des Läufers ausgeschaltet ist, zu einem zweiten Betriebsmodus, in dem die Funktion einer Erfassung der Position des Läufers eingeschaltet ist.

Eine Idee der Erfindung besteht darin, eine Versorgungsleitung des Elektromotors zu überwachen. Aus den Versorgungsleitungen wird bei Bewegung des Läufers des Elektromotors generatorisch eine Spannung induziert, die abhängig von dem Vorbeilaufen eines Läuferzahns an einem Motorpol Impulse generiert. Ein solcher Impuls kann als Aufwecksignal für einen Schlafbetriebsmodus in einem Steuergerät verwendet werden. Wenn in dem Schlafbetriebsmodus auch die Funktion zur Erfassung einer Position des Läufers abgeschaltet bzw. inaktiv ist, so kann das Triggersignal vorzugsweise dafür verwendet werden, die Positionserfassung schnellstmöglich zu aktivieren, so dass keine Positionsinformation verloren gehen kann.

Da für die Erzeugung des Triggersignals eine Bewegung des Läufers des Elektromotors erfolgen muss, kann eine dem generierten Triggersignal entsprechende Lageänderung bei der Positionsbestimmung des Läufers des Elektromotors berücksichtigt werden, so dass auch, wenn sich das Steuergerät im Schlafbetriebsmodus befindet, keine Positionsinformation verloren gehen kann.

Weiterhin kann die Funktion der Erfassung der Position des Läufers im zweiten Betriebsmodus das Bereitstellen einer Positionsinformation, die die Position des Läufers angibt, umfassen, wobei bei Erkennen des Triggersignals die Positionsinformation aktualisiert wird.

Gemäß einer weiteren Ausführungsform kann eine läuferlageabhängige Induktivität der elektrischen Maschine ermittelt werden, wobei das Aktualisieren der Positionsinformation abhängig von einer Positionsangabe durchgeführt wird, die von der ermittelten Induktivität abhängt. Dadurch kann die Aktualisierung der Position genau durchgeführt werden, da nicht sichergestellt ist, dass bereits der erste, durch Induktion generierte Spannungsimpuls als ein Triggersignal erkannt wird. Durch eine Zuordnung zwischen Läuferlage und Induktivität der elektrischen Maschine kann nach dem Einnehmen des zweiten Betriebsmodus die Positionsinformation auf die aktuelle Position des Läufers aktualisiert werden.

Es kann vorgesehen sein, dass das Wechseln zu dem zweiten Betriebsmodus das Aktivieren einer oder mehrerer weiterer Funktionen umfasst.

Gemäß einem weiteren Aspekt ist ein Steuergerät zum Erfassen einer Position eines Läufers einer elektrischen Maschine vorgesehen. Das Steuergerät umfasst:
- eine Detektionsschaltung zum Überwachen einer Versorgungsleitung der elektrischen Maschine, um ein durch Induktion einer Generatorspannung erzeugtes Triggersignal zu erkennen;
- eine Positionserfassungseinheit zum Erfassen der Position des Läufers der elektrischen Maschine;
- eine Betriebsmoduseinheit, um bei einem Erkennen des Triggersignals einen ersten Betriebsmodus zu verlassen, in dem die Positionserfassungseinheit zur Erfassung der Position des Läufers inaktiv ist, zu einem zweiten Betriebsmodus, in dem die Positionserfassungseinheit aktiv ist.

Weiterhin kann die Positionserfassungseinheit einen Speicher zum Bereitstellen einer Positionsinformation umfassen, die die Position des Läufers angibt, wobei die Positionserfassungseinheit ausgebildet ist, um die Positionsinformation abhängig von dem Triggersignal zu aktualisieren.

Gemäß einem weiteren Aspekt ist ein Motorsystem vorgesehen. Das Motorsystem umfasst:
- eine mechanisch kommutierte elektrische Maschine, die über Versorgungsleitungen mit elektrischer Energie versorgt wird, wobei je nach Kommutierung verschiedene Induktivitäten an den Versorgungsleitungen anliegen,
- das obige Steuergerät.

### Kurzbeschreibung der Zeichnungen

Bevorzugte Ausführungsformen der Erfindung werden nachfolgend anhand der beigefügten Zeichnungen näher erläutert. Es zeigen:
- Figur 1: eine schematische Darstellung eines Motorsystems mit einem Steuergerät und einem Elektromotor;
- Figur 2: eine Querschnittsdarstellung durch einen Gleichstrommotor mit zwei Motorpolen, mehreren Läuferzähnen sowie einem Kommutator mit zwei Bürsten;
- Figur 3A und 3B: verschiedene Stellungen des Kommutators bezüglich der Bürsten;
- Figur 4: ein Flussdiagramm zur Veranschaulichung des Verfahrens zum Betreiben eines Steuergeräts eines Motorsystems.

### Beschreibung von Ausführungsformen

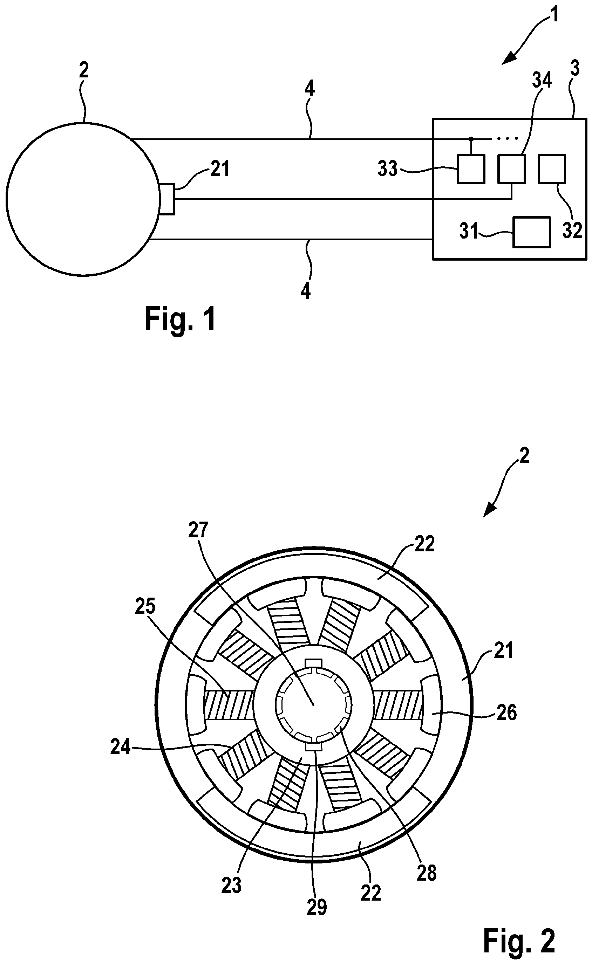

In Figur 1 ist ein Motorsystem 1 mit einem Elektromotor 2 als elektrische Maschine und einem Steuergerät 3 dargestellt. Der Elektromotor 2 entspricht vorzugsweise einem Gleichstrommotor, der über Bürsten, d.h. mechanisch, kommutiert wird, d.h. die Ansteuerung einzelner Läuferspulen (nicht gezeigt) erfolgt durch einen geeigneten Kommutator. Auch andere Formen von Elektromotoren, insbesondere auch Synchron- oder Asynchronmotoren sind verwendbar.

Das Steuergerät 3 dient dazu, den Elektromotor 2 über Versorgungsleitungen 4 mit elektrischer Energie zu versorgen. Bei Verwendung eines Gleichstrommotors erfolgt die Versorgung durch Anlegen einer Gleichspannung bzw. einer pulsweitenmodulierten Gleichspannung, bei der ein Tastverhältnis ein Maß für die durch den Elektromotor 2 bereitgestellten Leistung angibt. Alternativ, bei Synchron- bzw. Asynchronmotoren, wird eine elektrische Wechselspannung an den Elektromotor 2 angelegt, um diesen anzutreiben.

Im Folgenden wird die Erfindung anhand eines bürstenkommutierten Gleichstrommotors weiter erläutert. In Figur 2 ist eine Querschnittsdarstellung durch einen Gleichstrommotor gezeigt. Der Gleichstrommotor 2 umfasst einen Stator 21, der zwei Motorpole 22 umfasst. Die Motorpole 22 sind als Permanentmagneten ausgebildet, deren Magnetpole ins Innere des kreisförmigen Stators 21 zeigend ausgerichtet sind.

Im Inneren des Stators 21 ist ein Rotor 23 (Läufer) vorgesehen, der mehrere Rotorzähne 24 aufweist. Zumindest ein Teil der Rotorzähne 24 ist mit Rotorspulen 25 versehen. Die Rotorzähne 24 sind sternförmig an dem Rotor 23 angeordnet und weisen an ihrem äußeren Ende jeweils einen Zahnkopf 26 auf, durch den das durch die bestromte Rotorspule erzeugte Magnetfeld und das von den Permanentmagneten erzeugte Magnetfeld verlaufen.

Zur Kontaktierung der Ankerspulen 25 ist ein Kommutator 27 vorgesehen, der mehrere Kommutatorlamellen 28 aufweist, die zum Kontaktieren der Rotorspulen 25 dienen. Der Kommutator 27 wird über Kommutatorbürsten 29 kontaktiert. Bei Anlegen einer Gleichspannung kontaktieren die Bürsten 29 jeweils ein Teil der Kommutatorlamellen 28, so dass ein entsprechender Strom durch die zugeordneten Rotorspulen 25 fließt. Der Strom bewirkt ein Magnetfeld, das zu Anziehungs- bzw. Abstoßungskräften in dem durch die Motorpole 22 bewirkten Erreger-Magnetfeld führt. Dadurch wird der Rotor 23 angetrieben. Bei Nichtansteuerung des Gleichstrommotors 2 durch die Steuereinheit 3 bewirkt umgekehrt eine Drehung des Rotors 23 des Gleichstrommotors 2 im Erreger-Magnetfeld eine Induktion einer Spannung in den das Erregermagnetfeld durchlaufenden Rotorspulen 25. Die entsprechend induzierte Spannung kann dann über die jeweils die Kommutatorlamellen 28 kontaktierenden Bürsten 29 über die Versorgungsleitung an dem Steuergerät 3 anliegen.

Das Steuergerät 3 umfasst eine Betriebsmoduseinheit 31, um eine Steuerung von in dem Steuergerät 3 realisierten Funktionen durchzuführen. Die Betriebsmoduseinheit 31 kann sich in verschiedenen Betriebsmodi befinden. Befindet sich die Betriebsmoduseinheit 31 in einem Normalbetriebsmodus, werden die in dem Steuergerät 3 realisierten Funktionen, z.B. in dem Funktionsblock 32, ausgeführt. Daneben kann die Betriebsmoduseinheit 31 die Ausführung der Funktionen ganz oder teilweise anhalten, um einen Schlafbetriebsmodus zu realisieren.

Im Normalbetriebsmodus werden die implementierten Funktionen in der vorgesehenen Weise betrieben und benötigen dafür eine bestimmte elektrische Energie. Die implementierten Funktionen erhalten in der Regel externe Informationen über Betriebszustände des Systems und eine oder mehrere Sollvorgaben, um durch Bereitstellen von in der Regel elektrischen Signalen Einfluss auf das Betriebsverhalten des Systems zu nehmen. Im Schlafbetriebsmodus des Steuergeräts 3 ist die Anzahl der betriebenen Funktionen reduziert und/oder die Funktionen werden mit verminderter Leistung, d.h. mit verminderter Energie, betrieben. Dies kann beispielsweise durch eine Reduzierung der Frequenz des Systemtaktes erreicht werden, wodurch eine Energieeinsparung realisiert werden kann, die insbesondere bei batteriebetriebenen Motorsystemen zweckmäßig sein kann. Der Schlafbetriebsmodus wird beispielsweise bei Vorliegen bestimmter externer Bedingungen und/oder nach Ablauf einer vorbestimmten Zeitdauer eingenommen.

Um von dem Schlafbetriebsmodus in den Normalbetriebsmodus überzugehen, ist in der Regel eine externe Triggerung notwendig. Eine solche externe Triggerung kann beispielsweise durch regelmäßiges oder permanentes Abfragen entsprechend vorgesehener Sensoren oder durch auf sonstige Weise von extern bereitgestellten elektrischen Signalen erfolgen.

Im vorliegenden Fall ist vorgesehen, dass bei durch Anlegen eines externen Drehmoments bewirkten Drehung des Gleichstrommotors 2 beispielsweise durch manuelles Bewegen eines durch den Gleichstrommotor 2 angetriebenen Stellelements der dadurch generatorisch in den Rotorspulen bewirkte Spannungsimpuls von einer Detektionseinheit 33 der Steuereinheit 3 empfangen wird. Die Detektionseinheit 33 überwacht dazu mindestens eine der Versorgungsleitungen 4. Der dort durch eine Drehung des Gleichstrommotors 2 ausgelöste Spannungsimpuls wird ausgewertet und wird insbesondere dort als Triggersignal verwendet, um aus dem Schlafbetriebsmodus in den Normalbetriebsmodus überzugehen.

Alternativ kann auch in einen Betriebsmodus übergegangen werden, in dem zumindest die die Position des Läufers des Gleichstrommotors 2 überwacht werden kann. Die Positionserfassung des Gleichstrommotors 2 kann mit Hilfe einer Positionserfassungseinheit 34 im Steuergerät 3 erfolgen. Zum einen ist es möglich, die Position mit Hilfe eines geeigneten Positionssensors 21, der an dem Elektromotor 2 angeordnet ist, vorzunehmen. Der Positionssensor 21 kann beispielsweise in Form eines Hall-Sensors, GMR-Sensors und dergleichen ausgebildet sein, wobei in der Regel eine elektrische Größe an den Positionssensor angelegt wird, um eine Messgröße zu erhalten, die einem Messsignal entspricht, über das die Position des Läufers des Elektromotors 2 ermittelt werden kann. Die Positionsermittlung erfolgt in der Regel durch Zählen der Impulse oder durch entsprechende Kodierung des Positionssensors 21 in bekannter Weise. Die Positionserfassungseinheit 34 umfasst dazu einen Positionsspeicher, der eine entsprechende aktuelle Positionsinformation speichert.

Eine alternative Positionsbestimmung kann sensorlos durchgeführt werden, allein durch die Auswertung des aus dem Kommutieren resultierenden Stromverlaufs auf den Versorgungsleitungen. Eine absolute Positionsbestimmung kann dabei durchgeführt werden, indem die jeweilige Impedanz der an der bestimmten Position kontaktierten Ankerwicklung 25 bzw. kontaktierten Ankerwicklungen 25 ausgewertet wird.

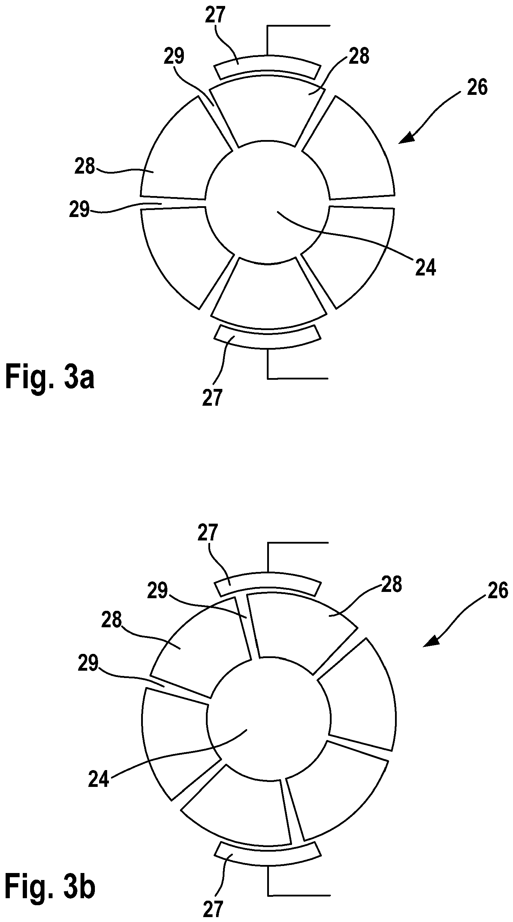

Wie in den Figuren 3A und 3B dargestellt ist, kann eine Bürste entweder nur eine Kommutatorlamelle 28 oder zwei benachbarte Kommutatorlamellen 28 kontaktieren. Die resultierende Impedanz der so kontaktierten Ankerwicklungen 25, die dann an die Versorgungsleitung angelegt ist, ist verschieden und für die bestimmte Position des Läufers des Gleichstrommotors 2 eindeutig. Dabei macht man sich Symmetrieungleichheiten und Bautoleranzen zunutze, nach denen die Impedanz jeder der Ankerwicklungen von den anderen verschieden ist. Zumindest ist die Impedanz einer der Ankerwicklungen von den Impedanzen der übrigen Ankerwicklungen verschieden.

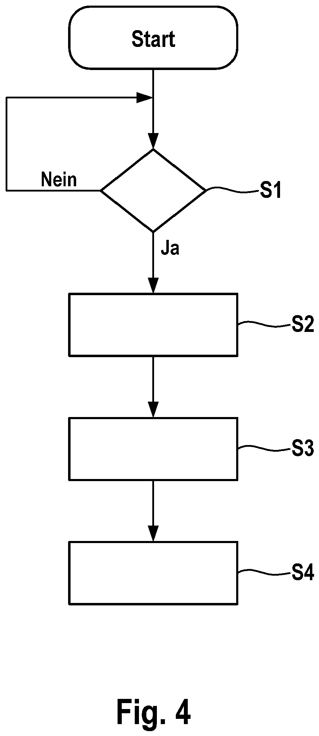

In Figur 4 ist ein Flussdiagramm zur Veranschaulichung des Verfahrens zum Betreiben des Steuergeräts 3 dargestellt. In Schritt S1 wird eine Abfrage durchgeführt, um einen Spannungsimpuls auf einer der Versorgungsleitungen 4 zu dem Gleichstrommotor 2 zu erkennen. Wenn ein solcher Spannungsimpuls erkannt wird (Alternative. Ja), wird in Schritt S2 ein Aufweckvorgang durchgeführt.

Der Aufweckvorgang erfolgt bei einem Erkennen eines Signals, das durch die Spannung in dem bzw. den Spulenanker/-n 25, deren zugeordnete Kommutatorlamellen 28 durch die Bürste 29 kontaktiert werden, generatorisch erzeugt wird.

Die Spannung äußert sich als Spannungsimpuls auf den Versorgungsleitungen 4 und kann in dem Steuergerät 3 erfasst werden. In der Betriebsmoduseinheit 31 wird der Spannungsimpuls als externes Triggersignal verwendet, um von dem Schlafbetriebsmodus in den Normalbetriebsmodus überzugehen oder in einen Betriebsmodus überzugehen, in dem eine ordnungsgemäße Positionserfassung gewährleistet ist.

Nach dem Empfang des Triggersignals und der Durchführung des Aufweckvorgangs wird in Schritt S3 die Positionserfassungseinheit 34 aktiviert, die zuvor durch den Schlafmodus inaktiv, d.h. ausgeschaltet, war. Mit der Positionserfassungseinheit zusätzlich verbundene, an dem Gleichstrommotor 2 angeordnete Positionssensoren werden mit der Aktivierung der Positionserfassungseinheit 34 ebenfalls aktiviert bzw. mit einer entsprechenden elektrischen Größe versorgt, um weitere Positionsänderungen des Läufers des Gleichstrommotors 2 zu erfassen.

In Schritt S4 kann der Weg des Läufers, den dieser zurückgelegt hat, bis das Triggersignal generiert worden ist, erfasst werden, indem Rückschlüsse auf die Impedanz der das Triggersignal generierenden Ankerwicklung 25 gezogen werden. Im generatorischen Betrieb kann die Impedanz beispielsweise durch die Anstiegszeit einer Signalflanke bzw. eines Teils einer Signalflanke des Triggersignals ermittelt werden, die von der Kapazität und Induktivitäten der Versorgungsleitungen des Eingangs des Steuergeräts 3 und weiteren parasitären Effekten abhängt. Die feste Zuordnung der ermittelten Impedanz zu einer bestimmten Ankerwicklung 25 kann durch die festgelegte Anordnung der Bürsten 29 und durch die festgelegte Zuordnung der Kommutatorlamellen 28 zu den jeweiligen Ankerspulen 25 erfolgen. Somit kann nach dem Aufwecken des Steuergeräts 3 aus dem Schlafbetriebsmodus durch das Triggersignal anhand von elektrischen Eigenschaften des Triggersignals auf denjenigen bzw. diejenigen Spulenanker 25 geschlossen werden, der/die das Triggersignal ausgelöst hat/haben. Daraus kann eine Positionsangabe des Läufers durch eine vorgegebene Zuordnungsfunktion, z.B. in Form einer Lookup-Tabelle ermittelt werden. Da davon auszugehen ist, dass die Zeitdauer zwischen dem Beginn einer Bewegung des Rotors des Gleichstrommotors 2 und dem Aktivieren der Positionserfassungseinheit 34 so gering ist, dass keine vollständige Umdrehung bezüglich der elektrischen Winkellage erfolgt ist, kann auch bei Erfassen der absoluten Position des Rotors eine Aktualisierung vorgenommen werden, ohne eine oder mehrere Umdrehungen bei der Positionserfassung zu verlieren.

Bei Verwendung eines Positionssensors 21 kann die dort detektierte Positionsangabe durch Bestimmen des jeweiligen Spulenankers, der das Triggersignal generiert hat, plausibilisiert oder korrigiert werden. Bei Ermittlung der Position des Rotors 23 des Gleichstrommotor 2 durch Zählen von Impulsen kann durch die Bestimmung des Statorankers 25, der das Triggersignal erzeugt hat, die Information über die absolute Lage des Rotors des Gleichstrommotor 2 korrigiert werden.

Alternativ kann vorgesehen sein, dass nach dem Aufwecken des Steuergeräts 3 aus dem Schlafbetriebsmodus eine Positionsmessung durchgeführt wird, bei der ein Frequenzsignal über die Versorgungsleitung an den Gleichstrommotor 2 angelegt wird, mit dessen Hilfe eine Impedanzmessung vorgenommen wird. Dies kann beispielsweise durch Auswertung eines auf das Frequenzsignal resultierenden Signals auf den Versorgungsleitungen 4 erfolgen, indem beispielsweise ein aus dem als Spannungssignal bereitgestellte Frequenzsignal resultierender Strom hinsichtlich seiner Phase und Amplitude ausgewertet wird bzw. indem ein an der Ankerspule 25 reflektiertes Frequenzsignal ausgewertet wird. Dadurch lässt sich die momentan kontaktierte Ankerspule 25 bzw. die mehreren kontaktierten Ankerspulen 25 bestimmen und es können daraus Rückschlüsse auf die Position des Rotors 23 des Gleichstrommotors 2 gezogen werden, insbesondere in Verbindung mit einer zuletzt erfassten Position des Läufers vor dem Einnehmen des Schlafbetriebsmodus. Bei Verwendung einer Positionserfassung - ungeachtet dessen, ob diese mit Hilfe eines zusätzlichen Positionssensors oder durch Auswertung der Stromverläufe durch die Versorgungsleitungen erfolgt - kann der Positionszähler entsprechend der bestimmten Ankerspule 25 aktualisiert werden, um einen möglicherweise während des Schlafbetriebsmodus aufgetretenen Versatz zwischen der zuletzt erfassten Position des Läufers des Gleichstrommotors 2 und der aktuellen Position des Läufers des Gleichstrommotors 2 auszugleichen.

## Patentansprüche

1. Verfahren zum Betreiben eines Steuergeräts (3) zum Erfassen einer Position eines Läufers einer elektrischen Maschine (2), insbesondere einer Rotorlage eines Rotors, mit folgenden Schritten:
- Überwachen (S1) einer Versorgungsleitung der elektrischen Maschine (2), um ein durch Induktion einer Generatorspannung erzeugtes Signal als Triggersignal zu erkennen;
- bei einem Erkennen des Triggersignals, Wechseln (S2, S3) von einem ersten Betriebsmodus, in dem zumindest die Funktion einer Erfassung der Position des Läufers (23) ausgeschaltet ist, zu einem zweiten Betriebsmodus, in dem die Funktion einer Erfassung der Position des Läufers (23) eingeschaltet ist, **dadurch gekennzeichnet, dass** die Funktion der Erfassung der Position des Läufers (23) im zweiten Betriebsmodus das Bereitstellen einer Positionsinformation, die die Position des Läufers (23) angibt, umfasst,
wobei bei Erkennen des Triggersignals die Positionsinformation aktualisiert wird (S4),
wobei eine läuferlageabhängige Induktivität der elektrischen Maschine (2) ermittelt wird und wobei das Aktualisieren der Positionsinformation abhängig von einer Positionsangabe durchgeführt wird, die von der ermittelten Induktivität abhängt.

2. Verfahren nach Anspruch 1, wobei das Wechseln zu dem zweiten Betriebsmodus das Aktivieren einer oder mehrerer weiterer Funktionen umfasst.

3. Steuergerät (3) zum Erfassen einer Position eines Läufers (23) einer elektrischen Maschine (2), umfassend:
- eine Detektionsschaltung (33) zum Überwachen einer Versorgungsleitung (4) der elektrischen Maschine (2), um ein durch Induktion einer Generatorspannung erzeugtes Triggersignals zu erkennen;
- eine Positionserfassungseinheit (34) zum Erfassen der Position des Läufers der elektrischen Maschine (2);
- eine Betriebsmoduseinheit (31), um bei einem Erkennen des Triggersignals einen ersten Betriebsmodus zu verlassen, in dem die Positionserfassungseinheit (34) zur Erfassung der Position des Läufers (23) inaktiv ist, zu einem zweiten Betriebsmodus, in dem die Positionserfassungseinheit (34) aktiv ist, **dadurch gekennzeichnet, dass** die Positionserfassungseinheit (34) einen Speicher zum Bereitstellen einer Positionsinformation umfasst, die die Position des Läufers (23) angibt,
wobei die Positionserfassungseinheit (34) ausgebildet ist, um die Positionsinformation abhängig von dem Triggersignal zu aktualisieren,
wobei eine läuferlageabhängige Induktivität der elektrischen Maschine (2) ermittelt wird und wobei das Aktualisieren der Positionsinformation abhängig von einer Positionsangabe durchgeführt wird, die von der ermittelten Induktivität abhängt.

4. Motorsystem (1) umfassend:
- eine elektrische Maschine (2), die über Versorgungsleitungen mit elektrischer Energie versorgt wird, wobei je nach Kommutierung verschiedene Induktivitäten an den Versorgungsleitungen (4) anliegen,
- ein Steuergerät (3) nach Anspruch 3.

## Claims

1. Method for operating a controller (3) for detecting a position of a rotor of an electrical machine (2), in particular a rotor position of a rotor, having the following steps of:
- monitoring (S1) a supply line of the electrical machine (2) in order to identify a signal produced by inducing a generator voltage as a trigger signal;
- changing (S2, S3) from a first operating mode, in which at least the function of detecting the position of the rotor (23) is switched off, to a second operating mode, in which the function of detecting the position of the rotor (23) is switched on, if the trigger signal is identified,
**characterized in that**
the function of detecting the position of the rotor (23) in the second operating mode comprises providing an item of position information which indicates the position of the rotor (23),
the position information being updated (S4) if the trigger signal is identified,
an inductance of the electrical machine (2) which is dependent on the rotor position being determined, and the position information being updated on the basis of a position indication which depends on the determined inductance.

2. Method according to Claim 1, the process of changing to the second operating mode comprising the activation of one or more further functions.

3. Controller (3) for detecting a position of a rotor (23) of an electrical machine (2), comprising:
- a detection circuit (33) for monitoring a supply line (4) of the electrical machine (2) in order to identify a trigger signal produced by inducing a generator voltage;
- a position detection unit (34) for detecting the position of the rotor of the electrical machine (2) ;
- an operating mode unit (31) in order to leave a first operating mode, in which the position detection unit (34) for detecting the position of the rotor (23) is inactive, and change to a second operating mode, in which the position detection unit (34) is active, if the trigger signal is identified,
**characterized in that**
the position detection unit (34) comprises a memory for providing an item of position information which indicates the position of the rotor (23), the position detection unit (34) being designed to update the position information on the basis of the trigger signal, an inductance of the electrical machine (2) which is dependent on the rotor position being determined, and the position information being updated on the basis of a position indication which depends on the determined inductance.

4. Motor system (1) comprising:
- an electrical machine (2) which is supplied with electrical energy via supply lines, different inductances being applied to the supply lines (4) depending on commutation,
- a controller (3) according to Claim 3.

## Revendications

1. Procédé pour faire fonctionner un contrôleur (3) destiné à détecter une position d'un rotor d'une machine électrique (2), notamment une position de rotor d'un rotor, comprenant les étapes suivantes :
- surveillance (S1) d'une ligne d'alimentation de la machine électrique (2) afin de détecter, en tant que signal de déclenchement, un signal généré par l'induction d'une tension d'alternateur ;
- lors de la détection du signal de déclenchement, basculement (S2, S3) d'un premier mode de fonctionnement, dans lequel au moins la fonction d'une détection de la position du rotor (23) est désactivée, en un deuxième mode de fonctionnement, dans lequel la fonction d'une détection de la position du rotor (23) est activée,
caractérisé en que
la fonction de détection de la position du rotor (23) dans le deuxième mode de fonctionnement comprend la mise à disposition d'une information de position qui indique la position du rotor (23),
l'information de position étant actualisée lors de la détection du signal de déclenchement (S4),
une inductance de la machine électrique (2), dépendante de la position du rotor, étant déterminée et l'actualisation de l'information de position étant effectuée en fonction d'une indication de position qui dépend de l'inductance déterminée.

2. Procédé selon la revendication 1, le basculement dans le deuxième mode de fonctionnement comprenant l'activation d'une ou plusieurs fonctions supplémentaires.

3. Contrôleur (3) destiné à détecter une position d'un rotor (23) d'une machine électrique (2), comprenant :
- un circuit de détection (33) destiné à la surveillance d'une ligne d'alimentation (4) de la machine électrique (2) afin de détecter un signal de déclenchement généré par l'induction d'une tension d'alternateur ;
- une unité de détection de position (34) destinée à détecter la position du rotor de la machine électrique (2) ;
- une unité de mode de fonctionnement (31) pour, en cas de détection du signal de déclenchement, quitter un premier mode de fonctionnement, dans lequel l'unité de détection de position (34) destinée à détecter la position du rotor (23) est inactive, pour un deuxième mode de fonctionnement, dans lequel l'unité de détection de position (34) est active,
caractérisé en que
l'unité de détection de position (34) comprend une mémoire destinée à la mise à disposition d'une information de position qui indique la position du rotor (23),
l'unité de détection de position (34) étant configurée pour actualiser l'information de position en fonction du signal de déclenchement,
une inductance de la machine électrique (2), dépendante de la position du rotor, étant déterminée et l'actualisation de l'information de position étant effectuée en fonction d'une indication de position qui dépend de l'inductance déterminée.

4. Système à moteur (1) comprenant :
- une machine électrique (2) qui est alimentée en énergie électrique par le biais de lignes d'alimentation, des inductances différentes étant présentes sur les lignes d'alimentation (4) suivant la commutation,
- un contrôleur (3) selon la revendication 3.
